# EUROPEAN PATENT SPECIFICATION

(11) **EP 1 577 982 B1**
(45) Date of publication and mention of the grant of the patent: **29.08.2007**
(21) Application number: 05251630.9
(22) Date of filing: 17.03.2005
(51) Int. Cl.: H01R 13/518, H01R 13/64, B60R 16/02

(54) **Electrical junction box and continuity inspection jig assembly fitted on the electrical junction box**
Elektrischer Verbindungskasten und die auf diesem Verbindungskasten eingebaute Prüfeinrichtung für elektrische Verbinder.
Boitier électrique de jonction et dispositif de contrôle pour connecteurs électriques fixés sur ce boitier.

(30) Priority: 17.03.2004 JP 2004076551; 24.03.2004 JP 2004086722; 30.03.2004 JP 2004099369
(43) Date of publication of application: 21.09.2005
(73) Proprietor: Sumitomo Wiring Systems, Ltd., Yokkaichi-City, Mie, 510-8503 (JP)
(72) Inventor: Saito, Yukitaka, c/o Sumitomo Wiring Systems, Ltd., Mie 510-8503 (JP); Isshiki,Yoshihiro c/o Sumitomo Wiring Systems, Ltd, Mie 510-8503 (JP); Yamasaki, Noriyuki, Sumitomo Wiring Systems, Ltd., Mie 510-8503 (JP); Sakai, Masao, c/o Toyota Jidosha K. K., Aichi-ken, 471-8571 (JP); Kaneko, Seiichi, c/o Toyota Jidosha K. K., Aichi-ken, 471-8571 (JP)
(74) Representative: Paget, Hugh Charles Edward

(56) References cited:
- EP-A- 0 326 350
- EP-A- 0 497 198

## Description

### Field of the Invention

This invention relates to an assembly of an electrical junction box and connectors connected thereto, especially an electrical junction box for a motor vehicle.

The present invention aims to prevent connectors from being misplaced in a connector housing socket provided on the exterior of the casing of the electrical junction box and from being misplaced in the continuity inspection jig assembly. The invention also provides a motor vehicle having the electrical junction box mounted in it.

### Background Art

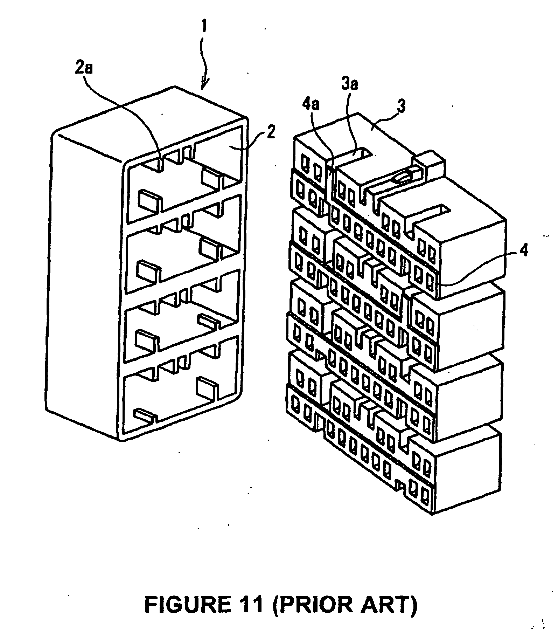

A mechanism for preventing connectors from being misplaced in connector housing sockets provided on an exterior of a casing of an electrical junction box has been disclosed in Japanese Utility Model Public Disclosure No. HEI 6-84684 (1994) and used in an electrical junction box 1 shown in Figure 11 of the present drawings. In this electrical junction box 1, a casing is provided on the exterior with connector receiving sockets 2. Misplacement prevention ribs 2a are provided at different positions on the respective sockets 2. Connectors 3 to be fitted in the respective sockets 2 are all formed with the same configuration. Each connector 3 is provided with misplacement prevention recesses 3a of a maximum number, as desired. The misplacement prevention recesses 3a receive the misplacement prevention ribs 2a when the connector 3 is inserted into the socket 2. Misplacement prevention cover members 4 are attached to the connectors 3, and have projections 4a for closing specified recesses 3a. Thus, each connector 3 can be inserted into only a given socket 2, thereby preventing misplacement of the connectors 3.

However, in this electrical junction box 1, the misplacement prevention member 4 having a given shape must be prepared for every connector 3, although all of the connectors 3 can be formed with the same configuration. This causes a problem of increasing the number of parts. Furthermore, since the misplacement prevention members 4 must be attached to the respective connectors 3, there is also a problem of increase of the number of working steps.

EP-A-0497198 shows a junction box having connector sockets on its exterior. Coding of the sockets to ensure correct fitting different connectors is achieved by grooves and ribs. EP-A-326350 which describes the features mentioned in the preamble of claim 1, shows a similar arrangement.

### Summary of the Invention

An object of the present invention is to prevent a connector from being misplaced in a connector engaging-section provided on an exterior of a casing of an electrical junction box without using a large number of parts.

The present invention provides an assembly comprising an electrical junction box and a plurality of electrical connectors connected to the electrical junction box, as set out in claim 1.

Preferably each of the pairs of complementary misplacement prevention elements of the connector housing sockets and the connectors comprises a recess and a rib. In this case, preferably the misplacement prevention elements of the connector housing sockets are the recesses and the misplacement prevention elements of the connectors are the ribs. Preferably the misplacement prevention elements of the first housing sockets are shifted in position in their respective sockets, relative to the position of the misplacement prevention elements of the second connector housing sockets in their respective sockets.

In the construction of the invention, since the misplacement prevention element or elements in the first connector housing socket and the misplacement prevention element or elements in the second connector housing socket differ in shape and/or position, e.g. are relatively shifted from each other, even if the first connector is inserted into the second socket or the second connector is inserted into the first socket, interference between the respective misplacement prevention elements prevents full fitting of the wrong connector in the wrong socket. This will prevent the misplacement of the connectors.

Two or more connector housing sockets are provided adjacent one another in the first and second directions in the array with the different first and second sockets adjacent to each other. Thus, the sockets having the same configuration are not disposed at adjacent positions but are apart, e.g. diagonally in the array. This makes it easier to avoid that one of the first connectors is misplaced in the wrong first connector housing socket, e.g. as discussed below. Accordingly, even if two or more sockets are provided, it is not necessary to provide different connectors corresponding to each of the sockets but necessary to provide only two kinds of connectors. This reduces the number of parts.

In the case where many connector housing sockets must be provided, three or more kinds of connectors may be provided. In this case, the positions of the misplacement prevention elements can be selected in accordance with the kinds of connectors and connector housing sockets.

Preferably, the connectors are joined to first ends of electrical wires and the electrical wires are bound together to form a wire harness, the wire harness being secured to said electrical junction box at a securing location spaced from the array in the second direction of said array,
wherein the connectors which are to be fitted respectively in the connector housing sockets adjacent one another in said first direction of the array have the same lengths of the electrical wires from said securing location to the first ends thereof, and the connectors which are to be fitted respectively in the connector housing sockets adjacent one another in the second direction of the array have respectively different lengths of the wires from the securing location to the first ends thereof.

With this construction, it is possible to define the attachment position of the connector in the second direction in accordance with the length, from the securing location, of the electrical wires attached to the connectors, thereby making it easier to avoid the connector from being misplaced in a connector housing socket in the second direction.

It is not necessary to increase the number of kinds of connectors, since the length of the electrical wire and the kind of connector define the attachment position of the connector.

For example, in the case where the connector housing sockets are arranged in two rows in the first direction and in plural rows in the second direction, if one of the adjacent sockets in the first direction is of a first socket type and the other of the adjacent sockets is of the second socket type, firstly the attachment position of the connector in the second direction can be defined by the length of its electrical wires and secondly the attachment position of the connector in the first direction can be defined by the kind of connector. It is thus possible to maximize avoidance of misplacement, using only two kinds of connectors.

The connector housing sockets and the connectors may be multipole. Preferably the connectors each make multiple electrical connections in the respective connector housing sockets and the connectors and the connector housing sockets each have a rectangular shape having a long-side direction corresponding to the second direction of the array and a short-side direction corresponding to the first direction of the array, and
the electrical junction box contains a bus bar which has tabs extending into one connector housing socket to engage one said connector therein, whereby an electrical connection circuit is formed in the connector via said bus bar. Thus, a splice circuit may be formed in one connector.

For example, plural tabs extend from a vertical (upright) bus bar and are spaced away from one another in the first direction. The plural vertical bus bars are juxtaposed in the second direction in the casing. A splice circuit may be formed in a single connector and/or between adjacent connectors in the first direction.

With this construction, if the vertical bus bars are juxtaposed in the second direction and the longitudinal direction of the vertical bus bar is positioned in the first direction, it is possible to cause the tabs extending from a single vertical bus bar to be projected into the adjacent connector housing sockets in the first direction and to easily form a splice circuit between the adjacent connectors in the first direction. If the tabs of the single vertical bus bar project into the same connector housing socket as well as the adjacent sockets, the splice circuit can be formed in a single one of the connectors.

Preferably, the multiple connectors to be fitted in adjacent multipole connector engaging-sections in the right and left direction are joined to distal ends of electrical wires constituting the same sub-harness. A splice circuit is formed in a portion between adjacent connectors in the first direction so that different sub-harnesses are connected to the splice circuit. With this construction, it is possible to easily connect the different sub-harnesses to one another through the bus bars.

Preferably, the tabs of the vertical bus bars pass through terminal holes in the connector housing sockets. The width direction of each of the tabs is positioned perpendicular to a long side direction of the connector housing socket. The width direction of the tab accords with the direction of a terminal (e.g. a slot of the terminal) in the connector to be fitted in the connector housing socket.

According to the above construction, since the longitudinal direction of the vertical bus bar accords with the width direction of the tabs in the first direction, if the vertical bus bars are juxtaposed in the second direction in the casing, it is not necessary to bend the tabs extending from the vertical bus bars. It is thus possible to easily form the vertical bus bars.

In addition, there is described herein a continuity inspection jig assembly for connectors to be fitted in the connector housing sockets in the electrical junction of the invention described above.

With this construction of the inspection jig, when conducting continuity inspection of connectors, the first connector cannot be inserted into the standard or regular position in the second continuity inspection jig, and the second connector cannot be inserted into the standard position in the first continuity inspection jig on account of different positions of the first and second misplacement prevention ribs on the first and second connectors and the different lengths of the first and second connector detachment pieces of the first and second connectors. Accordingly, it is possible to prevent continuity inspection for a connector misplaced in an erroneous continuity inspection jig.

Thus, the misplacement prevention ribs for the purpose of preventing the misplacement of connectors and the connector detachment pieces for the purpose of facilitating detachment of connectors can be utilized for the purpose of preventing the misplacement of connectors into the continuity inspection jig assembly. Accordingly, it is not necessary to prepare another member or to provide other projections on the connectors in order to prevent the connectors from being misplaced into the continuity inspection jig assembly.

In this specification, including the claims, the orientation words "upper", "lower", "upwards", "downwards", "vertical", "laterally", "sideways" etc. are used for convenience of description of the electrical junction box. In actual use, the box may be arranged in any suitable orientation.

### Brief Description of the Drawings

An embodiment of the present invention will be described below by way of non-limitative examples, referring to the drawings. In the drawings:
Figure 1 is an exploded perspective view of an embodiment of an electrical junction box in accordance with the present invention.
Figure 2A is a plan view of the electrical junction box, and Figure 2B is a bottom view of the electrical junction box.
Figure 3A is a plan view of a first multipole connector, and Figure 3B is a plan view of a second multipole connector.
Figure 4 is a left side elevation view of each of the multipole connectors of Figure 3.
Figures 5A and 5B are a plan view and a front elevation view of a first continuity inspection jig receiving a first one of the multipole connectors, and Figure 5C is a sectional view of the first continuity inspection jig.
Figure 6A is a front elevation view of a second continuity inspection jig for a second one of the multipole connectors, and Figure 6B is a sectional view of the second continuity inspection jig.
Figure 7A is a sectional view of the first continuity inspection jig for the first multipole connector, illustrating the second multipole connector that is inserted into the first jig by mistake, while Figure 7B is a sectional view of the second continuity inspection jig for the second multipole connector, illustrating the first multipole connector that is inserted into the second jig by mistake.
Figure 8 is a longitudinal section view of the electrical junction box in accordance with the present invention, illustrating a wire harness to be connected to and fixed in the electrical junction box.
Figure 9 is a plan view of the electrical junction box of Figure 1, illustrating the multipole connectors fitted in the connector housing sockets in the electrical junction box.
Figure 10 is a cross section of the electrical junction box of Figure 1 in the fore-and-aft direction.
Figure 11 is a perspective view of a known electrical junction box and connectors to be fitted in the box.

### Detailed Description of the Preferred Embodiments

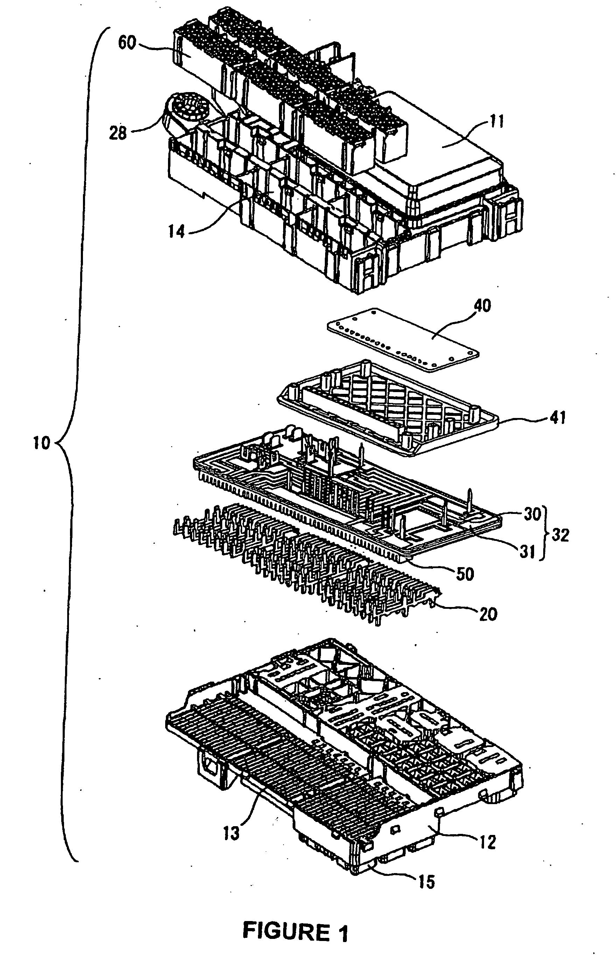

Figures 1 to 10 show an embodiment of an electrical junction box in accordance with the present invention. The electrical junction box 10 has a casing including an upper casing member 11 and a lower casing member 12, formed of molded plastics material and coupled together in a conventional manner to form a unitary casing body. An internal circuit is accommodated in the casing. The internal circuit includes vertical bus bars 20, a lamination body 32 in which flat bus bars 30 and insulation plates 31 are laminated alternately, and a printed board 40 (pcb).

The vertical bus bars 20 are so called because they each have a main base portion 23 which lies in a plane which extends upwardly and downwardly (vertically) relative to the upper and lower casing members 11, 12. The flat bus bars 30 are so called because they each have a main portion which lies in a plane which extends laterally or sideways (i.e. flat) relative to the upper and lower casing members 11, 12.

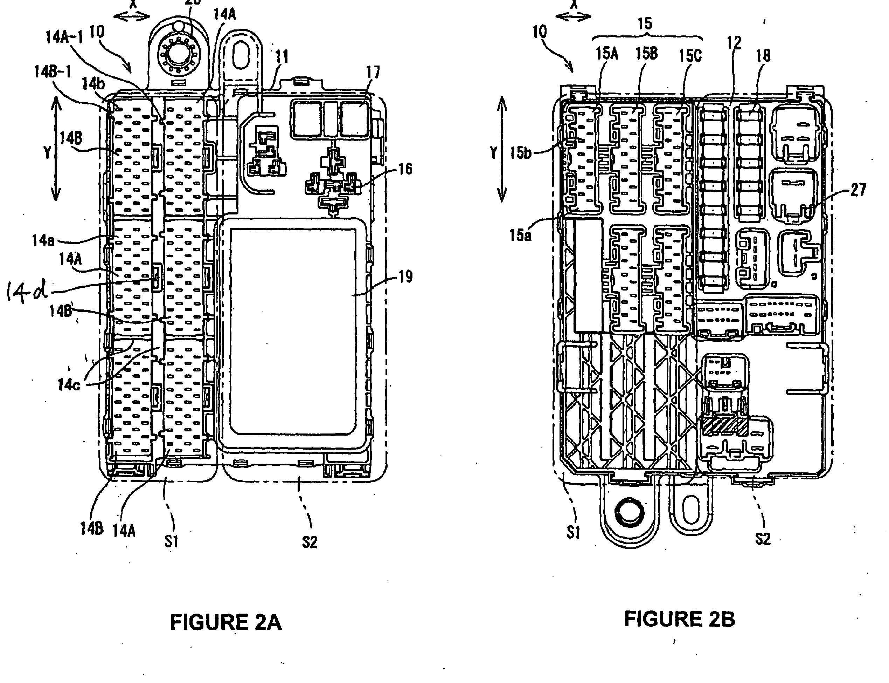

As seen in plan view, the electrical junction box 10 has on the one half side an arrangement area S1 for the vertical bus bars 20 (the area S1 is enclosed by an alternate long and short dash line in Figures 2A and 2B) in which a plurality of the bus bars 20 are juxtaposed parallel to each other and on the other half side with an arrangement area S2 for flat bus bars (the area S2 is enclosed by an alternate long and short two-dashes line in Figures 2A and 2B) in which the lamination body 32 including the flat bus bars 30 and insulation plates 31 are disposed.

Multiple connector housing sockets 14, for receiving multiple external connectors described below, are disposed adjacent to one another with intervening partitions 14c in a fore-and-aft direction (lateral direction X) and a right and left direction (longitudinal direction Y) in the arrangement area S1 for vertical bus bars on the exterior of the upper casing member 11. In this embodiment, six connector housing sockets 14 are disposed in a two-by-three grid pattern in the lateral and longitudinal directions X and Y.

For the purpose of avoiding mis-fitting of connectors, the connector housing sockets 14 are rectangular and include two different kinds of socket, being first connector housing sockets 14A and second connector housing sockets 14B, which are all generally of the same length and breadth. They are arranged so that two connector housing sockets 14 of the same kind are not disposed adjacent to each other (except at respective corners). For example, the connector housing socket 14 disposed in the central position in the longitudinal direction Y and in the front position in the lateral direction X (at the outer side of the upper casing member 11) is the first kind of socket 14A while the two connector housing sockets 14 disposed in the positions adjacent to this first socket 14A in the longitudinal direction Y and in the front positions in the lateral direction X are both of the second kind of socket 14B. The socket 14 disposed in the central position in the longitudinal direction Y and in the rear position in the lateral direction X is the second kind of socket 14B while the two sockets 14 disposed in the positions adjacent to this second socket 14B in the longitudinal direction Y and in the rear positions in the lateral direction X are both of the kind of socket 14A.

Each connector housing socket 14 has a rectangular configuration having a long side in the longitudinal direction Y and a short side in the lateral direction X. A lock portion 14d for locking engagement of the mating connector 60 in its fitted position is provided at a central part of each socket 14 in the longitudinal direction Y on an inner rear side opposite to an outer side of the casing, to engage a corresponding portion 63 of a connector 60.

Misplacement prevention recesses 14A-1, 14B-1 are provided at an inner front side of each socket 14 and extend vertically from an upper end of the socket 14 to a bottom wall 14a of the socket 14. Two misplacement prevention recesses 14A-1, 14B-1 are provided at symmetrical positions on each socket 14 with respect to a centerline of the socket 14 in the longitudinal direction Y, these recesses being relatively shifted in the first and second kinds of sockets 14A and 14B. Thus the recesses 14A-1 for a first kind of connector 60A in each first socket 14A are closer to the centerline in the longitudinal direction Y of the socket than the recesses 14B-1 for a second kind of connector 60B in each second socket 14B.

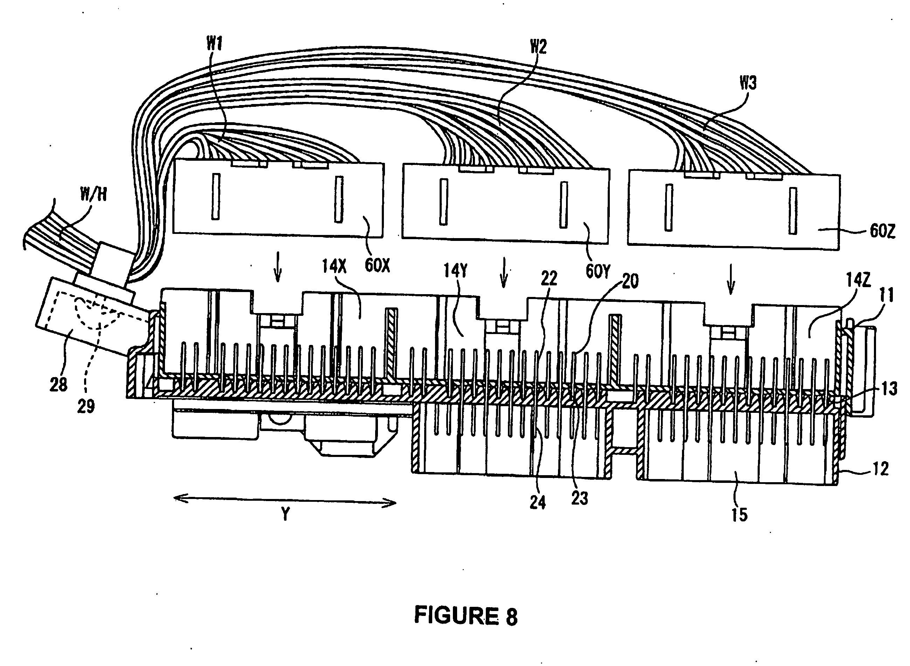

A wire-positioning bracket 28 extends integrally from a sidewall of the casing near the sockets 14 on the right side in the lateral direction X of the upper casing member 11. Electrical wires connected to terminals in the connectors 60 are bound together to form a wire harness W/H as shown in Figure 8. The wire harness W/H is positioned and secured to the bracket 28 by a clamp 29.

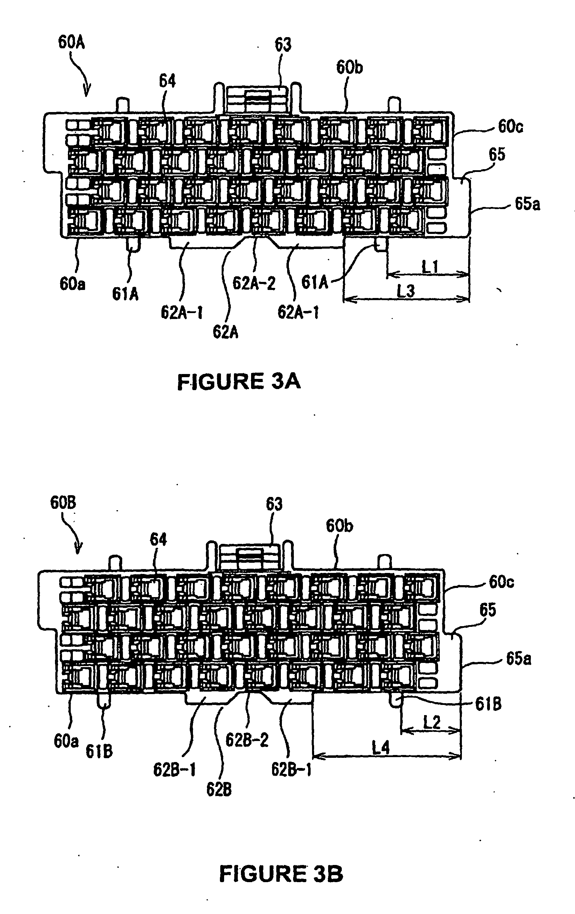

The connectors 60 to be fitted in the sockets 14 include a first kind of connector 60A to be fitted in the first kind of socket 14A and a second kind of connector 60B to be fitted in the second kind of socket 14B. The first and second connectors 60A and 60B have different configurations, as shown in Figures 3A and 3B.

The first and second connectors 60A and 60B are provided on their front surfaces 60a with first and second misplacement prevention ribs 61A and 61B, which cooperate with the first and second misplacement prevention recesses 14A-1 and 14B-1 in the first and second sockets 14A and 14B.

Thus, when the first connector 60A is inserted into the first socket 14A and the second connector 60B is inserted into the second socket 14B, the first and second ribs 61A and 61B are inserted into and fitted in the first and second recesses 14A-1 and 14B-1. On the other hand, when it is attempted to insert the second connector 60B into the first socket 14A or the first connector 60A into the second socket 14B, the second and first ribs 61B and 61A are brought into contact with peripheral walls of the first and second sockets 14A and 14B and the ribs 61B and 61A cannot enter the first and second recesses 14A-1 and 14B-1, thereby preventing the misplacement of connectors.

As described above, the first ribs 61A of the first connector 60A are closer to the centerline in the longitudinal direction Y than the second ribs 61B of the second connector 60B. A length L1 (Figure 3A) from a distal end 65a of a stop piece 65 on the right side surface 60c of the first connector 60A to the right side surface of the first rib 61A is longer than a length L2 from a distal end 65a of the stop piece 65 on the right side surface 60c of the second connector 60B to the right side surface of the second rib 61B.

As shown in Figures 3A and 3B, first and second connector detachment pieces 62A and 62B extend from central upper ends of front surfaces 60a on the first and second connectors 60A and 60B. The first and second detachment pieces 62A and 62B include right and left wings 62A-1 and 62B-1 and central recesses 62A-2 and 62B-2. The first detachment piece 62A of the first connector 60A is longer than the second detachment piece 62B of the second connector 60B in the right and left direction (longitudinal direction Y) in Figures 3A and 3B. A length L3 from the distal end 65a of the stop piece 65 of the first connector 60A to the right end surface of the first connector detachment piece 62A is shorter than a length L4 from the distal end 65a of the stop piece 65 of the second connector 60B to the right end surface of the second connector detachment piece 62B.

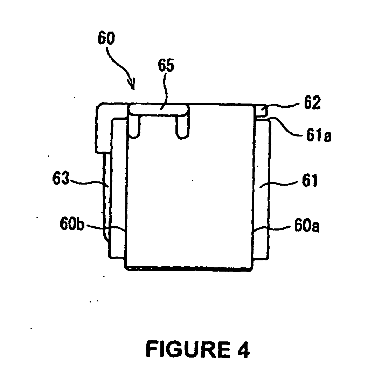

As shown in Figure 4, the upper end surface 61a provided on the rib 61 is disposed at a position slightly lower than the upper end of the multipole connector 60 so that the misplacement prevention rib 61 and connector detachment piece 62 are disposed at different positions in height.

A lock portion 63 is provided centrally in the longitudinal direction Y on the rear surface of the connector 60, to be joined to the corresponding lock portion 14d for connector engagement.

A plurality of terminal containing-chambers 64 are provided in staggered rows in each connector 60 and accommodate mating female terminals (not shown) for connection to the tabs 22 projecting in the sockets 14. These terminals are of a conventional type, formed of bent metal sheet, and have tab-receiving slots aligned with the orientation of the tabs 22 in the upper casing member 11. The tabs 22 will be described below in more detail.

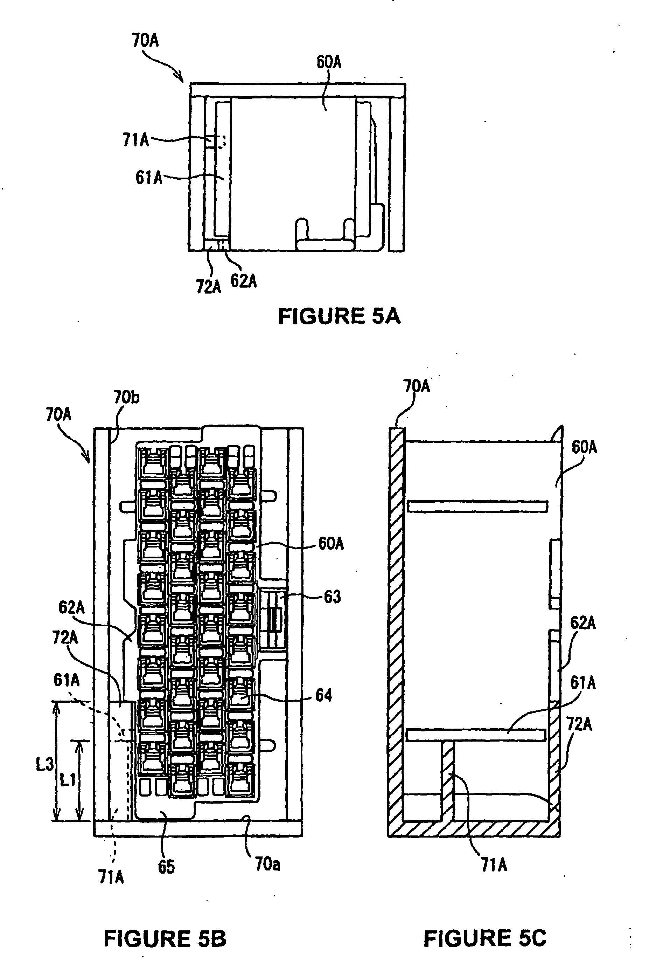

A continuity inspection jig assembly 70 (see Figures 5A to Figure 7B) is provided for the first and second connectors 60A and 60B. The assembly 70 includes a first continuity inspection jig 70A for the first kind of connector 60A and a second continuity inspection jig 70B for the second kind of connector 60B.

Each continuity inspection jig 70A, 70B has a box-like configuration that is open at the upper and front sides and is provided at the rear side with a through-hole (not shown) through which a probe for inspection (not shown) enters into the jig. The probe makes contact, with the terminals in the connector in the jig for continuity checking.

First and second positioning projections 71 and 72 extend from a bottom wall 70a along an inner surface of a sidewall 70b in the jig 70 and are relatively shifted in the lateral direction X. The first and second positioning projections 71 and 72 are disposed in the continuity inspection jig assembly 70 so that the first positioning projection 71 is opposed to the misplacement prevention rib 61 and the second positioning projection 72 is opposed to the connector detachment piece 62, when the connector 60 is inserted into the jig 70 at the right side surface 60c.

As shown in Figures 5A to 5C, in the first continuity inspection jig 70A for the first connector 60A, the first positioning projection 71A has the same height as the length L1 from the distal end 65a of the stop piece 65 of the first connector 60A to the right side surface of the first rib 61A while the second positioning projection 72A has the same height as the length L3 from the distal end 65a of the stop piece 65 to the right end surface of the second connector detachment piece 62A..

Thus, when the first connector 60A is inserted into the first jig 70A, the first connector 60A reaches a regular or standard insertion position on the lower end of the first jig 70A. Then, the upper end surface of the first projection 71A contacts the right side surface (lower side surface in Figure 5C) of the first rib 61A and the upper end surface of the second projection 72A contacts the right side surface (lower side surface in Figure 5C) of the first connector detachment piece 62A. Thus, the first connector 60A is disposed at the regular position.

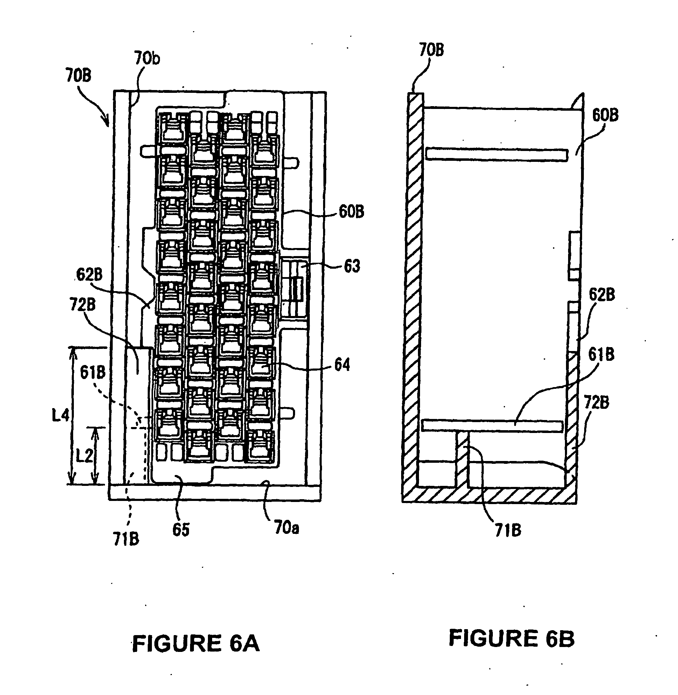

Similarly, as shown Figure 6, in the second continuity inspection jig 70B for the second connector 60B, a first positioning projection 71B has the same height as the length L2 from the distal end 65a of the stop piece 65 of the second connector 60B to the right side surface of the second rib 61B while a second positioning projection 72B has the same height as the length L4 from the distal end 65a of the stop piece 65 to the right end surface of the second connector detachment piece 62B.

Thus, when the second connector 60B is inserted into the second jig 70B, the second multipole connector 60B reaches a regular or standard position on the lower end of the second jig 70B. Then, the upper end surface of the first positioning projection 71B contacts the right side surface (lower side surface in Figure 6B) of the second rib 61B and the upper end surface of the second projection 72A contacts the right side surface (lower side surface in Figure 6B) of the second connector detachment piece 62B. Thus, the second multipole connector 60B is disposed at the regular position.

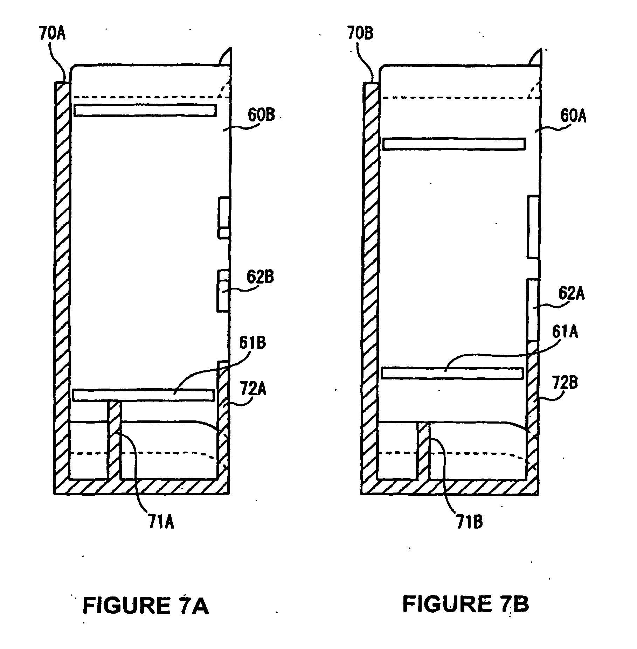

On the other hand, when the second connector 60B is inserted into the first jig 70A by mistake, as shown in Figure 7A, the first projection 71A that extends over the first projection 71B contacts the second rib 61B on the way to the regular position. Consequently, the second connector 60B cannot reach the regular position on the lower end in the first jig 70A and projects from the upper end of the first jig 70A.

Likewise, when the first connector 60A is inserted into the second jig 70B by mistake, as shown in Figure 7B, the second projection 72B that extends over the second projection 72A contacts the connector detachment piece 62A on the way to the regular position. Consequently, the second connector 60B cannot reach the regular position on the lower end in the second jig 70B and from the upper end of the second continuity inspection jig 70B.

Accordingly, it is possible for a worker to visually confirm that the first or second connector 60A or 60B is inserted into the second or first jig 70B or 70A by mistake. A probe for continuity inspection cannot be inserted into the terminal containing-chambers 64 in the connector. Thus, it is possible to prevent the misplaced connector from being subjected to continuity inspection.

After the continuity inspection has confirmed that six multipole connectors 60A and 60B are normal, electrical wires w1, w2, and w3 are joined to the connectors 60A and 60B and bound together to form the single wire harness W/H. The wire harness W/H, as shown in Figure 8, is secured to the bracket 28 by the clamp 29.

The electrical wires joined to the connectors 60 that engage the respective sockets 14 adjacent one another in the lateral direction X have the same length from the bracket 28 to their respective distal ends. On the other hand, if the sockets 14 adjacent to one another in the longitudinal direction Y are defined as sockets 14X, 14Y and 14Z in order from the side of the bracket 28, electrical wires w1, w2, and w3 joined to connectors 60X, 60Y and 60Z that engage the sockets 14X, 14Y and 14Z have respectively different lengths from the bracket 28 to their respective distal ends, respectively.

The length of the electrical wire w1 joined to the connector 60X to be fitted in one of the sockets 14X on the left side (near the bracket 28) in the longitudinal direction Y is selected so that the connector 60X can reach the socket 14X but cannot reach the central and right side sockets 14Y and 14Z. Similarly, the length of the electrical wire w2 joined to the connector 60Y is selected so that the connector 60Y can reach the socket 14Y but cannot reach the right side socket 14Z. Also, the length of the electrical wire w3 joined to the connector 60Z is set so that the connector 60Z can reach the socket 14Z.

Accordingly, two multipole connectors 60X (of the two kinds 60A and 60B) are selected in accordance with the lengths of the electrical wires from the bracket 28 for insertion in the two sockets of Figure 8 which are respectively sockets of the two kinds 14A and 14B, thereby preventing misplacement.

Similarly, two connectors 60Y (of the two kinds 60A and 60B) and two connectors 60Z (of the two kinds 60A and 60B) are selected in accordance with the lengths of the electrical wires, for insertion into the corresponding first and second sockets 14Y, 14Z of the two kinds 14A and 14B.

Thus, in the present embodiment, two kinds of connectors 60 are prepared for connection with six sockets 14 and three specific lengths of the electrical wires from the bracket 28 to the respective distal ends of the wires are required. Misplacement of the multipole connectors 60 can be prevented.

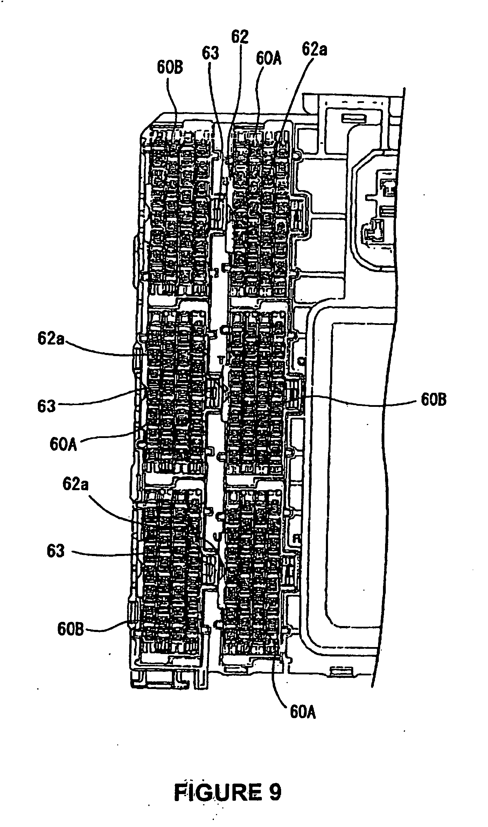

When the connectors 60 are fitted in the sockets 14, as shown in Figure 9, the connectors 60 adjacent to one another in the lateral direction X are disposed at positions such that the central recess 62a of the connector detachment piece 62 of the connectors 60 on the rear side are opposed to the lock portions 63 of the connectors 60 on the front side.

When the connectors 60 on the front side are tp be detached from the sockets 14, a bar-like tool (not shown) is inserted into the socket 14 through the recess 62a in the connector detachment piece 62 of the rear side connector 60 to release the lock. Then, the front side connector 60 is removed from the respective socket 14.

The internal circuit in the electrical junction box will now be described.

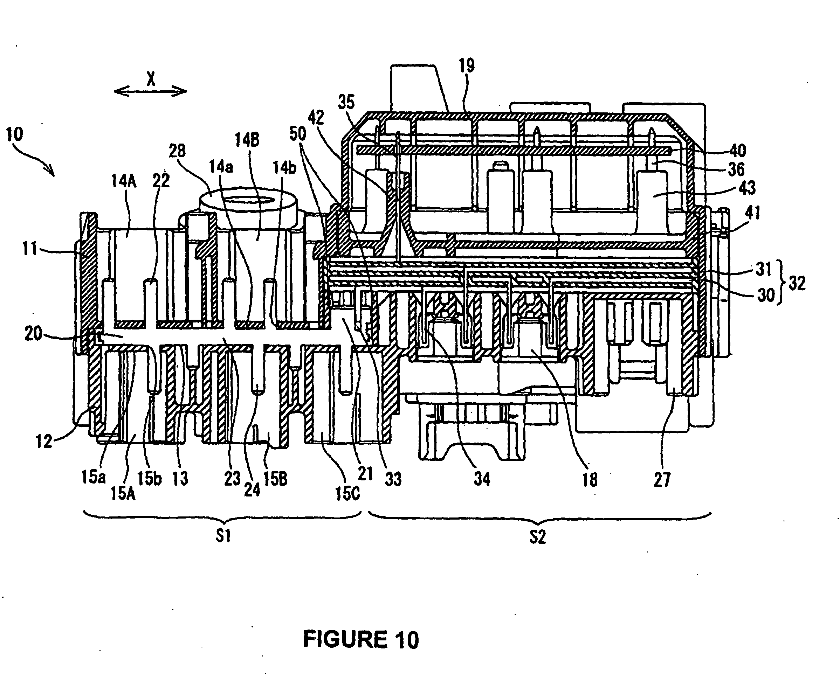

The sockets 14 are provided in bottom walls 14a with a plurality of terminal holes 14b. The long side direction of the terminal holes 14b is perpendicular to the long side direction of the sockets 14 (see Figures 2A and 10). The terminal holes 14b are staggered in rows along the long side direction of the sockets 14. Tabs 22 of vertical bus bars 20 held in the casing pass through the terminal holes 14b.

As shown in Figures 8 and 10, a plurality of compartments 13 are disposed in the area S1 in the lower casing member 12. The compartments 13 extend from the boundary region between the area S1 and the area S2 to the other side of the area S1 and are juxtaposed and spaced from one another in the longitudinal direction Y. A base portion 23 of each vertical bus bar 20 is pushed into and secured in the respective compartment 13.

The base portion 23 of the vertical bus bar 20 is disposed in the vertical direction in the electrical junction box. A plurality of tabs 22 and 24 extend from one or both of upper and lower sides of the base portion 23 and are spaced away from one another at respective positions on the base portion 23. The tabs 22 and 24 are not bent from the base portion 23 and a width direction of the tabs 22 and 24 accords with the longitudinal direction of the vertical bus bar 20.

The tabs 22 extend upward from the base portion 23 of the vertical bus bars 20 and project into the sockets 14 of the upper casing member 11 while the tabs 24 extend downward from the base portion 23 and project into sockets 15 for receiving connectors in the lower casing member 12.

In more detail, the tabs 22 and 24 extending from one vertical bus bar 20 project into two sockets 14A and 14B and multiple connectors 15A to 15C adjacent to one another in the lateral direction X. Plural tabs 22, which extend from the single vertical bus bar 20, also project into the same socket 14.

Accordingly, the connectors 60 are fitted in the sockets 14A and 14B and sockets 15A, 15B and 15C, are electrically connected (spliced) through the vertical bus bar 20.

In the present embodiment, the connector 60 fitted in the socket 14 on the front side in the lateral direction X is joined to a distal end of a first sub-harness (not shown) while the connector 60 fitted in the socket 14 on the rear side is joined to a distal end of a second sub-harness (not shown). Thus, when the connectors 60 are fitted in the sockets adjacent to one another in the lateral direction X, the first and second sub-harnesses may be spliced to each other.

Also, since plural tabs extend from the single vertical bus bar 20 and project into the same socket 14, a splice circuit can be formed by the vertical bus bar 20 even in a single connector 60 fitted in one socket 14.

On the other hand, the flat bus bars 30 are positioned in the area S2 for flat bus bars and one end of each flat bus bar 30 is disposed at the boundary region between the area S2 and the area S1. A tuning fork terminal 33 is bent downward at an end of the flat bus bar 30 to oppose a bus bar connection tab 21 of the vertical bus bar 20. The terminal 33 is disposed perpendicular to the connection tab 21. When a lamination body 32 is accommodated in the lower casing member 12, a given bus bar connection tab 21 is inserted into and pressure secured to a slit in the terminal 33 (see Figure 10).

The terminals 33 of the flat bus bars 30 are staggered in the arrangement area S2 so as to allow the vertical bus bars 20 to be arranged at a narrow pitch.

The terminals 33 of the flat bus bars 30 are previously covered with a protective resin block 50 to be protected they are brought into press contact with the tabs 21 of the vertical bus bars 20. The block 50 is provided with chambers into which the terminals 33 are pushed. The tabs 21 of the vertical bus bars 20 are inserted through holes in the lower ends of the chambers and are brought into press contact with the terminals 33.

Further terminal portions 34 are formed on the flat bus bar 30 by bending given parts of the bus bar 30 upward or downward, so as to project into for example a relay containing socket 16 or a fuse containing socket 17 (see Figure 2A) in the upper casing member 11, or into a connector housing socket 27 or a fuse socket 18 in the lower casing member 12 (see Figure 2B).

Also, as shown in Figure 10, housing portion 19 for a printed board is formed by a raised upper wall of the upper casing member 11. A printed board 40 is accommodated in the housing portion 19 with an insulation plate 41 interposed between the lamination body 32 and the printed board 40. Elongate conductor connection tabs 35 extend upward from at least the upper flat bus bar 30 to the printed board 40, and pass through supports 42 that extend upward from the insulation plate 41. The tabs 35 are connected to conductors of the printed board 40 by soldering. The printed board 40 is supported at a given height in the housing portion 19 by soldering the board 40 to securing tabs 36 that extend from the flat bus bar 30 and pass through the supports 43.

In the above construction, the first and second kinds of sockets 14A and 14B are provided in the upper casing member 11 of the electrical junction box 10, and have different positions of their misplacement prevention recesses 14A-1 and 14B-1. The first and second kinds of connectors 60A and 60B are fitted respectively in first and second kinds of sockets 14A and 14B, and have the first and second misplacement prevention ribs 61A and 61B at positions corresponding to the first and second misplacement prevention recesses 14A-1 and 14B-1. This prevents misplacement of the connectors. Furthermore, since the sockets 14A and 14B are arrange so that they are not adjacent to each other in the lateral and longitudinal directions, it is possible to prevent misplacement more surely.

Also, the electrical wires of the connectors fitted in the sockets 14 adjacent to one another in the longitudinal direction Y have different lengths. Thus, it is possible to identify the connector 60 to be fitted in the six sockets 14 in the upper casing member 11 in accordance with the length of the electrical wires and the kind of connector 60, thereby preventing misplacement. Accordingly, it is not necessary to prepare six kinds of connectors for six sockets 14, thereby reducing the number of parts and lowering cost in production.

On the occasion of continuity inspection for the connectors 60, the first kind of connector 60A cannot be inserted into the regular position in the second continuity inspection jig 70B and the second kind of connector 60B cannot be inserted into the regular position in the first continuity inspection jig 70A on account of the different positions of the misplacement prevention ribs 61 on the first and second connectors 60A and 60B and the length of the connector detachment piece 62. Consequently, it is possible to prevent continuity inspection for an erroneous multipole connector fitted in a continuity inspection jig. Thus, since the misplacement prevention rib 61 and connector detachment piece 62 that are provided for another purpose can be utilized to the purpose of preventing misplacement into the continuity inspection jig 70, it is not necessary to use another member or to provide another projection on the connector in order to prevent misplacement of the connector 60 into the continuity inspection jig 70.

In the present invention, the tabs extending from the vertical bus bar and joined to the mating terminals in the multipole connector, may be formed by bending an end of a flat bus bar or may be changed to tabs crimped on single core wires.

## Claims

1. An assembly comprising an electrical junction box (10) and a plurality of electrical connectors (60) connected to the electrical junction box,
said electrical junction box (10) comprising a casing (11, 12) having at its exterior a plurality of connector housing sockets (14) arranged adjacent one another in a two-dimensional array extending in first and second mutually perpendicular directions (X, Y),
said connector housing sockets (14) comprising first and second connector housing sockets (14A, 14B) each having a misplacement prevention element or elements (14A-1, 14B-1) for avoiding misplacement of the connectors in the connector housing sockets, the misplacement prevention elements (14A-1) of said first connector housing sockets (14A) being of different form in shape and/or position from the misplacement prevention elements (14B-1) of said second connector housing sockets (14B),
said connectors (60) comprising first and second connectors (60A, 60B) having misplacement prevention elements (61A, 61B) complementary in shape and position to said misplacement prevention elements (14A-1, 14B-1) of respectively said first and second connector housing sockets (14A, 14B), whereby said first connectors can be fitted into said first connector housing sockets and cannot be fitted into said second connector housing sockets, and said second connectors can be fitted into said second connector housing sockets and cannot be fitted into said first housing sockets,
**characterized in that**
said connector housing sockets (14) are arranged in said array in a manner such that each said first connector housing socket (14A) is next to at least one of said second connector housing sockets (14B) in both said first and second mutually perpendicular directions (X, Y) of said array.

2. An assembly according to claim 1, wherein each of the pairs of complementary misplacement prevention elements of said connector housing sockets and said connectors comprises a recess (14A-1, 14B-1) and a rib (61A, 61B).

3. An assembly according to claim 2, wherein the misplacement prevention elements of the connector housing sockets (14) are the recesses (14A-1, 14B-1) and the misplacement prevention elements of the connectors (60) are the ribs (61A, 61B).

4. An assembly according to any one of claims 1 to 3, wherein said misplacement prevention elements (14A-1) of said first housing sockets (14A) are shifted in position in their respective sockets, relative to the position of the misplacement prevention elements (14B-1) of the second connector housing sockets (14B) in their respective sockets.

5. An assembly according to any one of claims 1 to 4, wherein said connectors (60) are joined to first ends of electrical wires (W1, W2, W3) and said electrical wires (W1, W2, W3) are bound together to form a wire harness, said wire harness being secured to said electrical junction box at a securing location (28) spaced from said array in said second direction (Y) of said array,
wherein the connectors (60) which are to be fitted respectively in the connector housing sockets (14) adjacent one another in said first direction (X) of said array have the same lengths of said electrical wires from said securing location (28) to said first ends thereof, and the connectors (60) which are to be fitted respectively in the connector housing sockets (14) adjacent one another in said second direction of said array have respectively different lengths of said wires from said securing location (28) to said first ends thereof.

6. An assembly according to any one of claims 1 to 5, wherein said connectors (60) each make multiple electrical connections in the respective connector housing sockets (14) and said connectors (60) and said connector housing sockets (14) each have a rectangular shape having a long-side direction corresponding to said second direction of said array and a short-side direction corresponding to said first direction of said array, and
said electrical junction box (10) contains a bus bar (20) which has tabs (22, 24) extending into one said connector housing socket to engage one said connector therein, whereby an electrical connection circuit is formed in the connector (60) via said bus bar (20).

7. An assembly according to claim 6, wherein a plurality of said bus bars (20) are arranged in said casing juxtaposed to each other in said second direction (Y) of said array and extending in said first direction (X) of said array, said bus bars (20) having main portions (23) in planes perpendicular to said first and second direction of said array, each said bus bar (20) having plural tabs (22, 24) mutually spaced in said second direction of said array and extending into said connector housing sockets (14) to engage said connectors (60) therein, whereby an electrical connection circuit is formed via one of said bus bars in one of said connectors and/or between two said connectors fitted adjacent one another in said first direction of said array.

8. An assembly according to claim 7, wherein said connectors (60) fitted adjacent one another in said second direction of said array are joined to electrical wires (W1, W2, W3) constituting respective sub-harnesses, and an electrical connection circuit is formed via said bus bars between connectors fitted adjacent one another in said first direction of said array, whereby said sub-harnesses are connected via said electrical connection circuit.

9. An assembly according to claim 7 or 8, wherein said tabs (22, 24) of said bus bars extend through holes in base walls of said connector housing sockets (14), the width direction of said tabs being perpendicular to said long-side direction of said sockets (14).

10. A vehicle having an assembly according to any one of claims 1 to 9 mounted therein.

## Patentansprüche

1. Baugruppe, umfassend einen elektrischen Anschlusskasten bzw. Verteilerkasten (10) und eine Mehrzahl von elektrischen Verbindern (60), die mit dem elektrischen Anschlusskasten verbunden sind,
wobei der elektrische Anschlusskasten (10) eine Umhausung bzw. Gehäuse (11, 12) umfasst, die an ihrem Äußeren eine Mehrzahl von Verbindergehäusefassungen (14) in einer zueinander benachbarten Anordnung in einem zweidimensionalen Feld mit einer Erstreckung in ersten und zweiten wechselseitig senkrechten Richtungen (X, Y) umfasst,
wobei die Verbindergehäusefassungen (14) erste und zweite Verbindergehäusefassungen (14A, 14B) umfassen, von denen jede ein Fehlanordnungsverhinderungselement oder -elemente (14A-1, 14B-1) zur Vermeidung einer Fehlanordnung der Verbinder in den Verbindergehäusefassungen umfasst und die Fehlanordnungsverhinderungselemente (14A-1) der ersten Verbindergehäusefassungen (14A) der Form und/oder Position nach von den Fehlanordnungsverhinderungselementen (14B-1) der zweiten Verbindergehäusefassungen (14B) verschieden sind,
wobei die Verbinder (60) erste und zweite Verbinder (60A, 60B) umfassen, die Fehlanordnungsverhinderungselemente (61A, 61B) aufweisen, die der Form und Position nach zu den Fehlanordnungsverhinderungselementen (14A-1, 14B-1) der ersten beziehungsweise zweiten Verbindergehäusefassungen (14A, 14B) komplementär sind, wobei bzw. wodurch die ersten Verbinder in die ersten Verbindergehäusefassungen gepasst bzw. eingepasst werden können und nicht in die zweiten Verbindergehäusefassungen eingepasst werden können und die zweiten Verbinder in die zweiten Verbindergehäusefassungen gepasst bzw. eingepasst werden können und nicht in die ersten Gehäusefassungen eingepasst werden können,
**dadurch gekennzeichnet, dass**
die Verbindergehäusefassungen (14) in dem Feld derart angeordnet sind, dass jede erste Verbindergehäusefassung (14A) nahe an wenigstens einer der zweiten Verbindergehäusefassungen (14B) in den ersten und zweiten wechselseitig senkrechten Richtungen (X, Y) des Feldes ist.

2. Baugruppe nach Anspruch 1, bei der jedes der Paare der komplementären Fehlanordnungsverhinderungselemente der Verbindergehäusefassungen und der Verbinder eine Ausnehmung (14A-1, 14B-1) und eine Rippe (61A, 616) umfasst.

3. Baugruppe nach Anspruch 2, bei der die Fehlanordnungsverhinderungselemente der Verbindergehäusefassungen (14) die Ausnehmungen (14A-1, 14B-1) und die Fehlanordnungsverhinderungselemente der Verbinder (60) die Rippen (61A, 61 B) sind,

4. Baugruppe nach einem der Ansprüche 1 bis 3, bei der die Fehlanordnungsverhinderungselemente (14A-1) der ersten Gehäusefassungen (14A) in ihren jeweiligen Fassungen relativ zu der Position der Fehlanordnungsverhinderungselemente (14B-1) der zweiten Verbindergehäusefassungen (14B) in ihren jeweiligen Fassungen der Position nach versetzt sind.

5. Baugruppe nach einem der Ansprüche 1 bis 4, bei der die Verbinder (60) mit ersten Enden elektrischer Drähte (W1, W2, W3) verbunden sind und die elektrischen Drähte (W1, W2, W3) miteinander verbunden sind, um einen Kabelbaum zu bilden, wobei der Kabelbaum an dem elektrischen Anschlusskasten an einer Sicherungsstelle (28) gesichert ist, die von dem Feld in der zweiten Richtung (Y) des Feldes beabstandet ist,
wobei die Verbinder (60), die jeweils in den Verbindergehäusefassungen (14) benachbart zueinander in der ersten Richtung (X) des Feldes eingepasst werden bzw. werden sollen, dieselben Längen der elektrischen Drähte von der Sicherungsstelle (28) zu den ersten Enden hiervon aufweisen und die Verbinder (60), die jeweils in den Verbindergehäusefassungen (14) benachbart zueinander in der zweiten Richtung des Feldes eingepasst werden bzw. werden sollen, jeweils andere Längen der Drähte von der Sicherungsstelle (28) zu den ersten Enden hiervon aufweisen.

6. Baugruppe nach einem der Ansprüche 1 bis 5, bei der die Verbinder (60) jeweils mehrere elektrische Verbindungen in den jeweiligen Verbindergehäusefassungen (14) herstellen und die Verbinder (60) und die Verbindergehäusefassungen (14) jeweils die Form eines Rechteckes mit einer langseitigen Richtung entsprechend der zweiten Richtung des Feldes und einer kurzseitigen Richtung entsprechend der ersten Richtung des Feldes aufweisen und
der elektrische Anschlusskasten (10) eine Sammelschiene bzw. Stromanschluss bzw. Verteilerschiene (20) enthält, die Fortsätze (22, 24) aufweist, die, sich in eine der Verbindergehäusefassungen hinein erstrecken zur ineingriffnahme eines der Verbinders darin , wodurch eine elektrische Verbindungsschaltung in dem Verbinder (60) über die Sammelschiene (20) gebildet ist.

7. Baugruppe nach Anspruch 6, bei der eine Mehrzahl der Sammelschienen (20) in der Umhausung in Nebeneinanderlage zueinander in der zweiten Richtung (Y) des Feldes und mit einer Erstreckung in der ersten Richtung (X) des Feldes angeordnet ist, wobei die Sammelschienen (20) Hauptabschnitte (23) in Ebenen senkrecht zu der ersten und zweiten Richtung des Feldes aufweisen, wobei jede Sammelschiene (20) mehrere Fortsätze bzw. Laschen (22, 24) mit einer wechselseitigen Beabstandung in der zweiten Richtung des Feldes und mit einer Erstreckung in die Verbindergehäusefassungen (14) hinein zur Ineingriffnahme der Verbinder (60) darin aufweist, sodass bzw. wodurch eine elektrische Verbindungsschaltung über eine bzw. anhand einer der Sammelschienen in einem der Verbinder und/oder zwischen zwei der Verbinder, welche benachbart zueinander gepaßt sind, in der ersten Richtung des Feldes gebildet ist.

8. Baugruppe nach Anspruch 7, bei der die Verbinder (60) mit einer Einpassung benachbart zueinander in der zweiten Richtung des Feldes mit elektrischen Drähten (W1, W2, W3) zur Bildung jeweiliger Unterkabelbäume verbunden sind und eine elektrische Verbindungsschaltung über die Sammelschienen zwischen Verbindern, die benachbart zueinander eingepasst sind, in der ersten Richtung des Feldes gebildet ist, sodass die Unterkabelbäume über die elektrische Verbindungsschaltung verbunden sind.

9. Baugruppe nach Anspruch 7 oder 8, bei der sich die Fortsätze (22, 24) der Sammelschienen durch Löcher in Basiswänden der Verbindergehäusefassungen (14) erstrecken, wobei die Breitenrichtung der Fortsätze senkrecht zu der langseitigen Richtung der Fassungen (14) ist.

10. Fahrzeug mit einer darin eingebauten Baugruppe nach einem der Ansprüche 1 bis 9.

## Revendications

1. Ensemble comprenant un boîtier de distribution électrique (10) et une pluralité de connecteurs électriques (60) connectés au boîtier de distribution électrique,
ledit boîtier de distribution électrique (10) comprenant une enveloppe (11, 12) ayant à son extérieur une pluralité de supports de logement de connecteur (14) agencés de manière mutuellement adjacente dans une matrice bidimensionnelle s'étendant dans des première et seconde directions mutuellement perpendiculaires (X, Y),
lesdits supports de logement de connecteur (14) comprenant des premiers et seconds supports de logement de connecteur (14A, 14B) ayant chacun un élément de prévention de placement erroné (14A-1,14B-1) pour éviter le placement erroné des connecteurs dans les supports de logement de connecteur, les éléments de prévention de placement erroné (14A-1) desdits premiers supports de logement de connecteur (14A) étant de différentes formes et/ou positions par rapport aux éléments de prévention de placement erroné (14B-1) desdits seconds supports de logement de connecteur (14B),
lesdits connecteurs (60) comprenant des premier et second connecteurs (60A, 60B) ayant des éléments de prévention de placement erroné (61A, 61B) complémentaires en terme de forme et de position desdits éléments de prévention de placement erroné (14A-1, 14B-1) respectivement desdits premiers et seconds supports de logement de connecteur (14A, 14B), de telle manière que lesdits premiers connecteurs puissent être installés dans lesdits premiers supports de logement de connecteur et ne puissent pas être installés dans lesdits seconds supports de logement de connecteur, et que lesdits seconds connecteurs puissent être installés dans lesdits seconds supports de logement de connecteur et ne puissent pas être installés dans lesdits premiers supports de logement,
**caractérisé en ce que** lesdits supports de logement de connecteur (14) sont agencés dans ladite matrice de telle manière que chacun desdits premiers supports de logement de connecteur (14A) soit proche d'au moins un desdits seconds supports de logement de connecteur (14B) dans lesdites première et seconde directions mutuellement perpendiculaires (X, Y) de ladite matrice.

2. Ensemble selon la revendication 1, dans lequel chacune des paires d'éléments de prévention de placement erroné complémentaires desdits supports de logement de connecteur et lesdits connecteurs comprennent un évidement (14A-1, 14B-1) et une nervure (61A, 61B) .

3. Ensemble selon la revendication 2, dans lequel les éléments de prévention de placement erroné des supports de logement de connecteur (14) sont les évidements (14A-1, 14B-1) et les éléments de prévention de placement erroné des connecteurs (60) sont les nervures (61A, 61B).

4. Ensemble selon l'une quelconque des revendications 1 à 3, dans lequel lesdits éléments de prévention de placement erroné (14A-1) desdits premiers supports de logement de connecteur (14A) sont décalés en position dans leurs supports respectifs, par rapport à la position des éléments de prévention de placement erroné (14B-1) des seconds supports de logement de connecteur (14B) dans leurs supports respectifs.

5. Ensemble selon l'une quelconque des revendications 1 à 4, dans lequel lesdits connecteurs (60) sont raccordés à des premières extrémités de fils électriques (W1, W2, W3) et lesdits fils électriques (W1, W2, W3) sont fixés conjointement pour former un faisceau de fils, ledit faisceau de fils étant fixé audit boîtier de distribution électrique à un emplacement de fixation (28) espacé de ladite matrice dans ladite seconde direction (Y) de ladite matrice,
dans lequel les connecteurs (60) qui sont destinés à être installés respectivement dans les supports de logement de connecteur (14) de manière mutuellement adjacente dans ladite première direction (X) de ladite matrice ont les mêmes longueurs desdits fils électriques dudit emplacement de fixation (28) auxdites premières extrémités de ceux-ci, et les connecteurs (60) qui sont destinés à être installés respectivement dans les supports de logement de connecteur (14) de manière mutuellement adjacente dans ladite seconde direction de ladite matrice ont respectivement des longueurs différentes desdits fils dudit emplacement de fixation (28) auxdites premières extrémités de ceux-ci.

6. Ensemble selon l'une quelconque des revendications 1 à 5, dans lequel lesdits connecteurs (60) forment chacun des connexions électriques dans les supports de logement de connecteur (14) et lesdits connecteurs (60) et lesdits supports de logement de connecteur (14) ont chacun une forme rectangulaire ayant une direction de grand côté correspondant à ladite seconde direction de ladite matrice et une direction de petit côté correspondant à ladite première direction de ladite matrice, et
ledit boîtier de distribution électrique (10) contient une barre omnibus (20) qui a des languettes (22, 24) s'étendant dans un desdits supports de logement de connecteur pour engager ledit connecteur dans celui-ci, de telle manière qu'un circuit de connexion électrique soit formé dans le connecteur (60) par l'intermédiaire de ladite barre omnibus (20).

7. Ensemble selon la revendication 6, dans lequel une pluralité desdites barres omnibus (20) sont agencées dans ladite enveloppe mutuellement juxtaposées dans ladite seconde direction (Y) de ladite matrice et s'étendant dans ladite première direction (X) de ladite matrice, lesdites barres omnibus (20) ayant des parties principales (23) dans des plans perpendiculaires auxdites première et seconde directions de ladite matrice, chacune desdites barres omnibus (20) ayant une pluralité de languettes (22, 24) mutuellement espacées dans ladite seconde direction de ladite matrice et s'étendant dans lesdits supports de logement de connecteur (14) pour engager lesdits connecteurs (60) dans ceux-ci, de telle manière qu'un circuit de connexion électrique soit formé par l'intermédiaire de l'une desdites barres omnibus dans un desdits connecteurs et/ou entre deux desdits connecteurs installés en position mutuellement adjacente dans ladite première direction de ladite matrice.

8. Ensemble selon la revendication 7, dans lequel lesdits connecteurs (60) installés en position mutuellement adjacente dans ladite seconde direction de ladite matrice sont raccordés à des fils électriques (W1, W2, W3) constituant des sous-faisceaux respectifs, et un circuit de connexion électrique est formé par l'intermédiaire desdites barres omnibus entre des connecteurs installés en position mutuellement adjacente dans ladite première direction de ladite matrice, de telle manière que lesdits sous-faisceaux soient connectés par l'intermédiaire dudit circuit de connexion électrique.

9. Ensemble selon la revendication 7 ou 8, dans lequel lesdites languettes (22, 24) desdites barres omnibus s'étendent à travers des trous dans des parois de base desdits supports de logement de connecteur (14), la direction de la largeur desdites languettes étant perpendiculaire à ladite direction de grand côté desdits supports (14).

10. Véhicule ayant un ensemble selon l'une quelconque des revendications 1 à 9 monté dans celui-ci.
